# EUROPÄISCHE PATENTSCHRIFT

(11) **EP 1 381 142 B1**
(45) Veröffentlichungstag und Bekanntmachung des Hinweises auf die Patenterteilung: **26.07.2006**
(21) Anmeldenummer: 03015438.9
(22) Anmeldetag: 09.07.2003
(51) Int. Cl.: H02K 7/02, H02K 7/08

(54) **Elektrische Maschine mit einem um eine vertikale Drehachse umlaufenden Rotor**
Rotating electric machine with a vertical shaft rotor
Machine électrique comportant un rotor tournant à axe vertical

(30) Priorität: 10.07.2002 DE 10231087
(43) Veröffentlichungstag der Anmeldung: 14.01.2004
(73) Patentinhaber: Piller Power Systems GmbH, 37520 Osterode am Harz (DE)
(72) Erfinder: Ueffing, Norbert, 37520 Osterode am Harz (DE)
(74) Vertreter: Rehberg Hüppe + Partner

(56) Entgegenhaltungen:
- US-A- 4 563 605
- PATENT ABSTRACTS OF JAPAN Bd. 0070, Nr. 29 (M-191), 5. Februar 1983 (1983-02-05) & JP 57 183578 A (MAEKAWA SEISAKUSHO KK), 11. November 1982 (1982-11-11)
- PATENT ABSTRACTS OF JAPAN Bd. 0081, Nr. 39 (E-253), 28. Juni 1984 (1984-06-28) & JP 59 047944 A (MITSUBISHI DENKI KK), 17. März 1984 (1984-03-17)
- PATENT ABSTRACTS OF JAPAN Bd. 1998, Nr. 13, 30. November 1998 (1998-11-30) & JP 10 220341 A (NIPPON SEIKO KK), 18. August 1998 (1998-08-18)

## Beschreibung

Die Erfindung bezieht sich auf eine elektrische Maschine mit den Merkmalen des Oberbegriffs des Patentanspruchs 1.

Bei vielen elektrische Maschinen mit einem Gehäuse und mit einem um eine vertikale Drehachse umlaufenden Rotor, wobei zwischen dem Gehäuse und dem Rotor zwei in Richtung der vertikalen Drehachse voneinander beabstandete Drehlager vorgesehen sind und wobei der Rotor eine Rotorwicklung und eine Schwungmasse aufweist, ist das Schwungrad am unteren Ende des Rotors vorgesehen, um den Schwerpunkt und das Trägheitsmoment der Maschinen zu Gunsten der Stabilität ihres Gesamtaufbaus möglichst tief anzuordnen. Der Zugang zu dem unteren Drehlager des Rotors der bekannten elektrischen Maschinen wird durch ein Schwungrad größeren Durchmessers, in dem bei gleicher Masse und Drehzahl eine größere kinetische Energie speicherbar ist, relativ stark behindert. Es ist daher üblich, die bekannten elektrischen Maschinen auf einem Sockel anzuordnen, der den Zugang zu dem unteren Drehlager von seitlich unten ermöglicht. Hierdurch wird die Gesamtbauhöhe der bekannten elektrischen Maschinen gesteigert.

Eine elektrische Maschine mit den Merkmalen des Oberbegriffs des Patentanspruchs 1 ist aus PATENT ABSTRACTS OF JAPAN Bd. 0070, Nr. 29 (M-191), 5. Februar 1983 (1983-02-05) & JP 57 183578A (MAEKAWA SEISAKUSHO KK), 11. November 1982 (1982-11-11) bekannt. Hier befindet sich das Schwungrad in einem oben offenen Teil des Gehäuses, während die Rotorwicklung in einem hiervon getrennten Teil des Gehäuses unterhalb des Schwungrads angeordnet ist. Die elektrische Maschine steht mit diesem unteren separaten Teil des Gehäuses auf dem Boden auf.

Aus PATENT ABSTRACTS OF JAPAN Bd. 0081, Nr. 39 (E-253), 28. Juni 1984 (1984-06-28) & JP 59 047944 A (MITSUBISHI DENKI KK), 17. März 1984 (1984-03-17) ist eine weitere elektrische Maschine mit den Merkmalen des Oberbegriffs des Patentanspruchs 1 bekannt. Hier ist das Schwungrad zusammen mit allen anderen an dem Rotor gelagerten Teilen in einem zylindrischen Gehäuse angeordnet, das sich mit vollem Durchmesser auch über die Teile des Rotors hinweg erstreckt, die einen geringeren Durchmesser als das Schwungrad aufweisen.

Aus der US 4,563,605 ist ein elektrischer Drehschrittmotor bekannt, der einen um eine vertikale Drehachse umlaufenden Rotor aufweist, wobei der Rotor eine Rotorwicklung und oberhalb der Rotorwicklung einen Drehschwingungstilger aufweist. Der Drehschwingungstilger umfasst eine Tilgermasse in Form einer Metallscheibe, die elastische an den Rest des Rotors angekoppelt ist.

Der Erfindung liegt die Aufgabe zugrunde, eine elektrische Maschine mit den Merkmalen des Oberbegriffs des Patentanspruchs 1 aufzuzeigen, bei der das untere Drehlager des Rotors eine gute Zugänglichkeit aufweist, ohne dass dies durch Nachteile bezüglich der Bauhöhe der Maschine oder der Stabilität ihres Gesamtaufbaus erkauft wird.

Erfindungsgemäß wird diese Aufgabe durch eine elektrische Maschine mit den Merkmalen des Patentanspruchs 1 gelöst.

Vorteilhafte Ausführungsformen der neuen elektrischen Maschine sind in den Unteransprüchen beschrieben.

Damit das Schwungrad der neuen elektrischen Maschine im oberen Bereich des um die vertikale Drehachse umlaufenden Rotors, d.h. oberhalb der Rotorwicklung, angeordnet ist, sind verschiedene Vorteile hinsichtlich des Gesamtaufbaus der elektrischen Maschine verbunden. Konkret ist das Drehlager am unteren Ende des Rotors von der Seite her leichter zugänglich ist, als dies bei einem direkt angrenzend angeordneten Schwungrad der Fall wäre. Außerdem ergibt sich durch die aus der Anordnung des Schwungrads im oberen Bereich des Rotors resultierende Form des Gehäuses ein bevorzugter Ort für die Anordnung von Lagerfüßen für die elektrische Maschine, um diese von oben auf einem Traggestell aufzulagern. Die Lagerfüße, welche jeweils einen Elastomerkörper zur Schwingungsdämpfung aufweisen können, sind vorzugsweise an vier um die Drehachse drehsymmetrisch verteilten Punkten unterhalb eines Gehäusekragens angeordnet, welcher das Schwungrad aufnimmt.

Wenn die von den Lagerfüßen definierte Ebene die Drehachse ungefähr im Bereich des Schwerpunkts des Rotors schneidet, so ist die Gefahr des Auftretens von Koppelschwingungen, welche durch geringsten Unwuchten des Rotors 3 ausgelöst werden können, minimiert.

Zur Entlastung der Drehlager kann ein Hubmagnet ebenfalls im Bereich des oberen Endes des Rotors vorgesehen sein, wie dies bei elektrischen Maschinen mit vertikal ausgerichteter Drehachse des Rotors und einem aufgrund eines Schwungrads schwergewichtigen Rotors grundsätzlich bekannt ist.

Wenn das eine Drehlager ein Festlager mit einem ortsfesten gehäuseseitigen Lagerring und das andere Drehlager ein Loslager mit einem in Richtung der vertikalen Drehachse verschieblichen gehäuseseitigen Lagerring ist, wobei das Festlager einen wesentlichen Teil der Gewichtskraft des Rotors abstützt und wobei Vorspannmittel für eine Vorspannkraft auf den verschieblichen gehäuseseitigen Lagerring des Loslagers vorgesehen sind, um auf den verschieblichen gehäuseseitigen Lagerring des Loslagers eine nach oben gerichtete Vorspannkraft auszuüben, sind die Vorspannmittel vorzugsweise dazu vorgesehen, auf den verschieblichen gehäuseseitigen Lagerring des Loslagers eine nach oben gerichtete Vorspannkraft auszuüben, die über das Loslager einen weiteren wesentlichen Teil von mindestens 20 % der Gewichtskraft des Rotors abstützt. Dabei ist die Vorspannkraft auf den verschieblichen gehäuseseitigen Lagerring des Loslagers nach oben gerichtet und zwar unabhängig davon, ob das Loslager unterhalb oder oberhalb des Festlagers angeordnet ist. Außerdem ist die Vorspannkraft nicht nur so groß, dass unkontrollierte Lagerbewegungen des Loslagers vermieden werden. Vielmehr geht sie soweit darüber hinaus, dass über das Loslager mindestens 20 % der Gewichtskraft des Rotors abgestützt werden. Um diese Abstützung der Gewichtskraft des Rotors wird das Festlager entlastet. Für eine besonders gleichmäßige Verteilung der Belastung muss die nach oben gerichtete Vorspannkraft über das Loslager entsprechend 40 bis 60 %, d.h. etwa 50 %, der Gewichtskraft des Rotors abstützen. Der Rotor kann damit bei der neuen elektrischen Maschine im Vergleich zu dem Stand der Technik annähernd die doppelte Masse aufweisen, ohne dass es zu einer Überlastung der Drehlager kommt.

Die Vorspannmittel, die die Vorspannkraft auf den verschieblichen Lagerring des Loslagers aufbringen, können eine mechanische, eine magnetische und/oder eine pneumatische Feder umfassen. In jedem Fall ist darauf zu achten, dass die nach oben gerichtete Vorspannkraft über alle Schiebestellungen des gehäuseseitigen Lagerrings des Loslagers hinweg einen zumindest im wesentlichen gleichbleibenden Teil der Gewichtskraft des Rotors abstützt. Mechanische Federn müssen dazu relativ lang ausgebildet werden. Für pneumatische Federn muss ein relativ großer Druckspeicher vorgesehen werden und magnetische Federn müssen ggf. mit Elektromagneten bezüglich ihrer Kraft geregelt werden.

Konkret kann an der Unterseite des Gehäuses eine Verschiebehülse ausgebildet sein, in der eine den gehäuseseitigen Lagerring des Loslagers umfassende Lagerbuchse in Richtung der vertikalen Drehachse verschieblich gelagert ist, wobei die Lagerbuchse über den gesamten freien Querschnitt der Verschiebehülse abgedichtet ist. Die Druckdifferenz zwischen dem unten auf die Lagerbuchse wirkenden Umgebungsdruck und einem oben auf die Lagerbuchse wirkenden Innendruck im Inneren des Gehäuses bewirkt eine definierte Vorspannkraft, welche sich aus der Druckdifferenz mal der Fläche der Lagerbuchse berechnet. Die Druckdifferenz liegt typischerweise bei 950 Hektopascal, wenn in dem Inneren des Gehäuses ein technisches Vakuum von ca. 50 Hektopascal, absolut, vorgesehen wird, was mit relativ einfachen Vakuumpunkten zu erreichen ist. Selbst relativ große Schwankungen des absoluten Drucks im inneren des Gehäuses führen nur zu geringen prozentualen Schwankungen des Differenzdrucks und damit nur zu geringen prozentualen Schwankungen der Vorspannkraft auf den gehäuseseitigen Lagerring des Loslagers.

Bei der neuen elektrischen Maschine können beide Drehlager jeweils mindestens ein Schrägschulterkugellager aufweisen. Beide Schrägschulterkugellager stehen dabei durch die von Ihnen abgestützte Gewichtskraft von etwa der Hälfte der gesamten Gewichtskraft des Rotors unter definierter Vorspannung.

Die Erfindung wird im Folgenden anhand eines Ausführungsbeispiels näher erläutert und beschrieben, dabei zeigt
- Fig. 1: einen vertikalen Längsschnitt durch die gesamte elektrische Maschine,

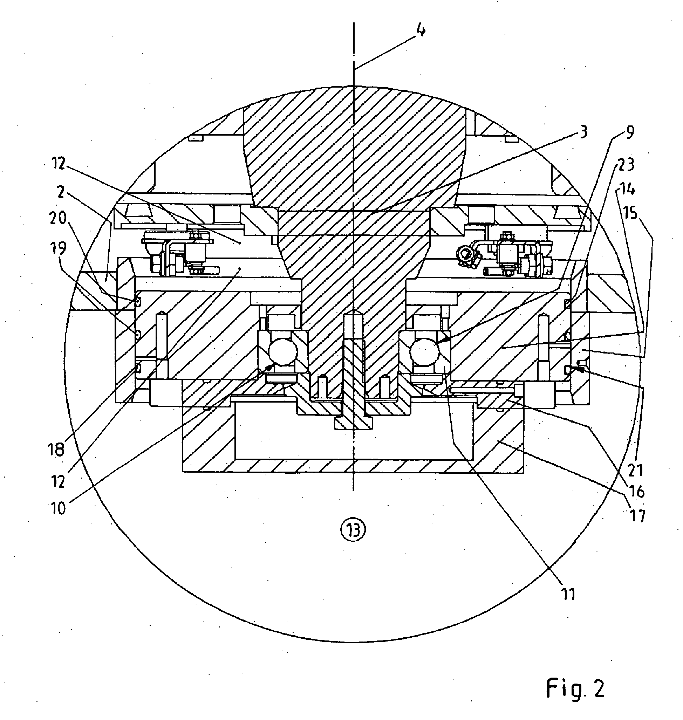

- Fig. 2: ein Detail aus Fig. 1 im Bereich eines unteren Loslagers und

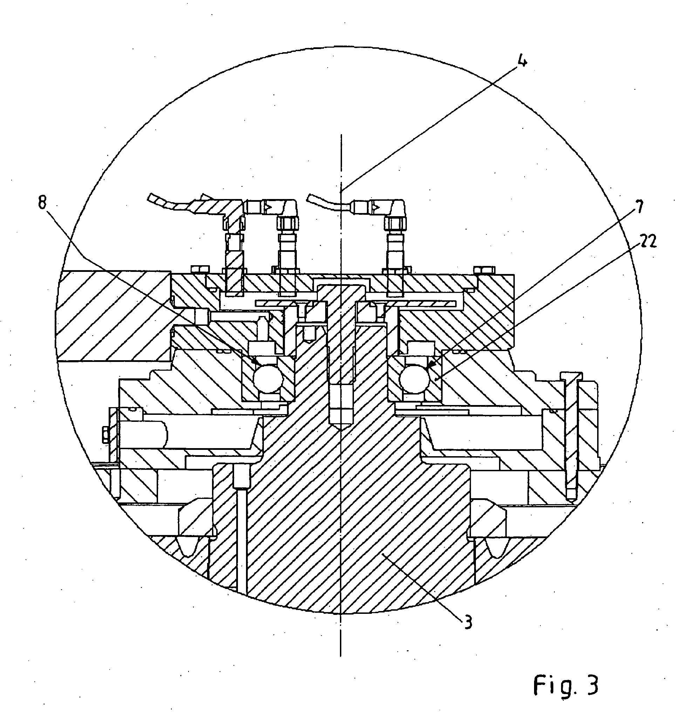

- Fig. 3: ein weiteres Detail aus Fig. 1 im Bereich eines oberen Festlagers für den Rotor der elektrischen Maschine.

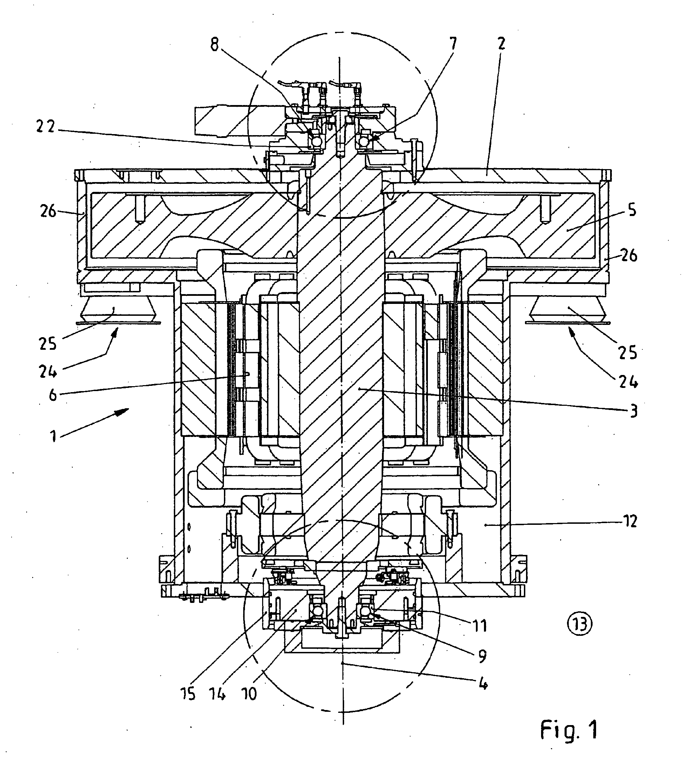

Die in Fig. 1 dargestellte elektrische Maschine 1 weist ein Gehäuse 23 auf, in dem ein Rotor 3 um eine vertikal ausgerichtete Drehachse 4 umläuft. Der Rotor 3 trägt neben dem beweglichen Teil der elektrischen Maschine 1, d.h. neben einer Rotorwicklung 4 ein Schwungrad 5. Die Gesamtmasse des Rotors 3 ist damit so groß, dass seine Gewichtskraft nicht ohne weiteres durch ein einzelnes Schrägschulterkugellager 7 an dem Gehäuse 2 abgestützt werden kann, ohne dieses Schrägflächenkugellager 7 zu überbeanspruchen. Neben dem Schrägflächenkugellager 7, das im oberen Bereich der elektrischen Maschine 1 zwischen dem Gehäuse 2 und dem Rotor 3 als Festlager 8 vorgesehen ist und einen ortsfesten gehäuseseitigen Lagerring 22 aufweist, ist ein weiteres Schrägflächenkugellager 9 im unteren Bereich der elektrischen Maschine zwischen dem Rotor 3 und dem Gehäuse 2 vorgesehen. Dieses Schrägflächenkugellager 9 ist als Loslager 10 konzipiert. D.h., sein gehäuseseitiger Lagerring 11 ist in Richtung der Drehachse 4 verschieblich, um Längentoleranzen zwischen dem Rotor 3 und dem Gehäuse 2 auszugleichen. Solche Längentoleranzen treten bei der elektrischen Maschine 1 beispielsweise deshalb auf, weil das Innere 12 der elektrischen Maschine 1 mit einer hier nicht dargestellten Vakuumpumpe evakuierbar ist, um die Luftreibung des Rotors 3 in dem Inneren 12 der elektrischen Maschine 1 zu reduzieren. Aufgrund der damit auftretenden Druckdifferenz zwischen dem Inneren 12 des Gehäuses 2 und der Umgebung 13 wird das Gehäuse 2 deformiert, woraus die angesprochenen Längentoleranzen zu dem Rotor 3 resultieren. Diese Längentoleranzen haben durchaus die Größenordnung einiger Millimeter. Um dennoch eine definiert von unten nach oben gerichtet Vorspannkraft auf den Lagerring 11 auszuüben, so dass auch das Schrägschulterkugellager 9 einen wesentlichen Anteil der Gewichtskraft des Rotors 3 abstützen kann, um das Festlager 8 zu entlasten, ist eine den Lagerring 11 umfassende Lagerbuchse 14 in einer Verschiebehülse 15 des Gehäuses 2 in Richtung der Drehachse 4 verschieblich gelagert. Weiterhin ist die Lagerbuchse 14 durch Abdeckteile 16 und 17 im Bereich der Drehachse 4 und umlaufende elastische Dichtungen 18, 19 und 20, beispielsweise in Form von O-Ringen, gegenüber dem Innenumfang der Verschiebehülse 15 abgedichtet. So beaufschlagt die Druckdifferenz zwischen der Umgebung 13 und dem evakuierten Inneren 12 des Gehäuses 2 die Lagerbuchse 8 in Richtung der Drehachse 4 nach oben. Die genaue Größe dieser Kraft ergibt sich aus dem Produkt der Druckdifferenz mit der Querschnittsfläche der Lagerbuchse 14. Sie kann damit so eingestellt werden, dass sie neben der eigenen Gewichtskraft der Lagerbuchse 14 die Hälfte der Gewichtskraft des Rotors 3 abstützt und zwar über das Schrägschulterkugellager 11, dessen Schrägschultern dabei in derselben Richtung angestellt sind wie die Schrägschultem des Schrägschulterkugellagers 7. Weiterhin ist zwischen der Verschiebehülse 15 und der Lagerbuchse 14 ein Quetschöldämpfer ausgebildet, in dem ein Ringspalt 21 zwischen den beiden unteren Dichtungen 18 und 19 eine viskose Flüssigkeit, insbesondere Öl angeordnet ist. Der Ringspalt 21 kann dabei mit eine Ölpuffervolumen kommunizieren. Der Quetschöldämpfer dient zur Reduzierung des Schwingungsniveaus des Gehäuses 2 und reduziert die Lagerbelastung des Schrägschulterkugellagers 9 in radialer Richtung zur der Drehachse 4. Die obere Dichtung 20 ist als reine Vakuumdichtung 23 vorgesehen. An ihr steht keine Flüssigkeit an.

Eine Besonderheit der in Fig. 1 dargestellten elektrischen Maschine besteht darin, dass das Schwungrad 5 im oberen Bereich des um die vertikale Drehachse 4 umlaufenden Rotors 3, d.h. oberhalb der Rotorwicklung 6, angeordnet ist. Hiermit sind Vorteile hinsichtlich des Gesamtaufbaus der elektrischen Maschine 1 verbunden, die sich unabhängig mit der Ausbildung der Lager für den Rotor 3 ergeben. So könnte beispielsweise neben dem Festlager 8 am oberen Ende des Rotors 3 ein reines Loslager 10, das nicht mit einer Haltekraft für den Rotor 3 nach oben beaufschlagt ist, am unteren Ende des Rotors 3 vorgesehen sein. Dabei könnte zur Entlastung des oberen Festlagers ein Hubmagnet ebenfalls im Bereich des oberen Endes des Rotors 3 vorgesehen sein, wie dies bei elektrischen Maschinen mit vertikal ausgerichteter Drehachse 4 des Rotors 3 und einem aufgrund eines Schwungrads 5 schwergewichtigen Rotors 3 grundsätzlich bekannt ist. Die Anordnung des Schwungrads 5 im oberen Bereich des Rotors 3 hat zum einen den konkreten Vorteil, dass das Loslager 10 am unteren Ende des Rotors 3 von der Seite leichter zugänglich ist, als dies bei einem direkt angrenzend angeordneten Schwungrad 5 der Fall wäre. Zum anderen ergibt sich durch die aus der Anordnung des Schwungrads 5 im oberen Bereich des Rotors 3 resultierende Form des Gehäuses 2 ein bevorzugter Ort für die Anordnung von Lagerfüßen 24 für die elektrische Maschine 1, um diese von oben auf einem Traggestell, welches hier nicht dargestellt ist, aufzulagern. Die Lagerfüße 24, welche jeweils einen Elastomerkörper 25 zur Schwingungsdämpfung aufweisen, sind an vier um die Drehachse 4 drehsymmetrisch verteilten Punkten unterhalb des Gehäusekragens 26 angeordnet, welcher das Schwungrad 5 aufnimmt. Die von den vier Lagerfüßen 24 definierte Ebene schneidet die Drehachse 4 ungefähr im Bereich des Schwerpunkts des Rotors 3. So ist die Gefahr des Auftretens von Koppelschwingungen, welche durch geringsten Unwuchten des Rotors 3 ausgelöst werden können, minimiert.

### BEZUGSZEICHENLISTE

- 1 -: elektrische Maschine
- 2 -: Gehäuse
- 3 -: Rotor
- 4 -: Drehachse
- 5 -: Schwungrad
- 6 -: Wicklung
- 7 -: Schrägschulterkugellager
- 8 -: Festlager
- 9 -: Schrägschulterkugellager
- 10 -: Festlager

- 11 -: Lagerring
- 12 -: Inneres
- 13 -: Umgebung
- 14 -: Lagerbuchse
- 15 -: Verschiebehülse
- 16 -: Abdeckteil
- 17 -: Abdeckteil
- 18 -: Dichtring
- 19 -: Dichtring
- 20 -: Dichtring

- 21 -: Ringspalt
- 22 -: Lagerring
- 23 -: Vakuumdichtung
- 24 -: Lagerfuß
- 25 -: Elastomerkörper
- 26 -: Gehäusekragen

## Patentansprüche

1. Elektrische Maschine (1) mit einem Gehäuse (2) und mit einem um eine vertikale Drehachse umlaufenden Rotor (3), wobei Zwischen dem Gehäusen (2) und dem Rotor (3) zwei in Richtung der vertikalen Drehachse (4) voneinander beabstandete Drehlager vorgesehen sind, wobei der Rotor (3) eine Rotorwicklung (6) und ein Schwungrad (5) umfasst und wobei das Schwungrad (5) im oberen Bereich des um die vertikale Drehachse (4) umlaufenden Rotors (3) oberhalb der Rotorwicklung (6) angeordnet ist, **dadurch gekennzeichnet, dass** Lagerfüße (24) des Gehäuses (2) unten an einem Gehäusekragen (26) angeordnet sind, welcher das Schwungrad (5) aufnimmt

2. Elektrische Maschine nach Anspruch 1, **dadurch gekennzeichnet, dass** eine von den Lagerfüßen (24) des Gehäuses (2) definierte Ebene die Drehachse (4) ungefähr im Bereich des Schwerpunkts des Rotors (3) schneidet.

3. Elektrische Maschine nach einem der Ansprüche 1 und 2, **dadurch gekennzeichnet, dass** ein Hubmagnet im oberen Bereich des Rotors (3) vorgesehen sein.

4. Elektrische Maschine nach einem der Ansprüche 1 bis 3, **dadurch gekennzeichnet, dass** das eine Drehlager ein Festlager (8) mit einem ortsfesten gehäuseseitigen Lagerring (22) und das andere Drehlager ein Loslager (10) mit einem in Richtung der vertikalen Drehachse verschieblichen gehäuseseitigen Lagerring (11) ist, wobei das Festlager einen wesentlichen Teil der Gewichtskraft des Rotors abstützt und wobei Vorspannmittel für eine Vorspannkraft auf den verschieblichen gehäuseseitigen Lagerring des Loslagers vorgesehen sind, um auf den verschieblichen gehäuseseitigen Lagerring (11) des Loslagers (10) eine nach oben gerichtete Vorspannkraft auszuüben, die über das Loslager (10) einen weiteren wesentlichen Teil von mindestens 20 % der Gewichtskraft des Rotors (3) abstützt.

5. Elektrische Maschine nach Anspruch 4, **dadurch gekennzeichnet, dass** die nach oben gerichtete Vorspannkraft über das Loslager (10) 40 bis 60 % der Gewichtskraft des Rotors (3) abstützt.

6. Elektrische Maschine nach Anspruch 4 oder 5, **dadurch gekennzeichnet, dass** die Vorspannmittel eine mechanische, eine magnetische und/oder eine pneumatische Feder umfassen.

7. Elektrische Maschine nach einem der Ansprüche 4 bis 6, **dadurch gekennzeichnet, dass** an dem Gehäuses (2) eine Verschiebehülse (15) ausgebildet ist, in der eine den gehäuseseitigen Lagerring (11) des Loslagers (10) umfassende Lagerbuchse (14) in Richtung der vertikalen Drehachse (4) verschieblich gelagert ist.

8. Elektrische Maschine nach einem der Ansprüche 1 bis 7, **dadurch gekennzeichnet, dass** beide Drehlager (8 und 10) jeweils mindestens ein Schrägschulterkugellager (7, 9) aufweisen.

## Claims

1. Electric machine (1) having a housing (2) and a rotor rotating about a vertical rotation axis, two rotation bearings being provided between the housing (2) and the rotor (3) at a distance in the direction of the vertical rotation axis (4), the rotor (3) comprising a rotor winding (6) and a fly wheel (5), and the fly wheel (5) being arranged in the upper area of the rotor (3) rotating about the vertical rotation axis (4) above the rotor winding (6), **characterized in that** support feet (24) of the housing (2) are arranged under a collar (26) of the housing containing the fly wheel (5).

2. Electric machine according to claim 1, **characterized in that** a plane defined by the support feet (24) of the housing (2) intersects the rotation axis (4) approximately in the area of the centre of mass of the rotor (3).

3. Electric machine according to any of the claims 1 and 2, **characterized in that** a lift solenoid is arranged in the upper area of the rotor (3).

4. Electric machine according to any of the claims 1 to 3, **characterized in that** one rotation bearing is a fixed bearing (8) having a fixed bearing ring (22) at the side of the housing, and that the other rotation bearing is a floating bearing (10) having a bearing ring (11) at the side of the housing which is moveable in the direction of the vertical rotation axis, the fixed bearing supporting an essential part of the gravity force of the rotor, and preloading means exerting a preload force onto the moveable bearing ring at the housing side of the floating bearing being provided for applying an upwardly directed preload force onto the moveable bearing ring (11) at the housing side of the floating bearing (10), which supports a further essential part of at least 20 % of the gravity force of the rotor (3) via the floating bearing.

5. Electric machine according to claim 4, **characterized in that** the upwardly directed preload force supports 40 to 60 % of the gravity force of the rotor (3) via the floating bearing (10).

6. Electric machine according to claim 4 or 5, **characterized in that** the preloading means include a mechanical, a magnetic and/or a pneumatic spring.

7. Electric machine according to any of the claims 4 to 6, **characterized in that** a slide socket (15) is provided at the housing (2), in which a bearing bushing (14) comprising the bearing ring (11) at the housing side of the floating bearing (10) is mounted moveably in the direction of the vertical rotation axis (4).

8. Electric machine according to any of the claims 1 to 7, **characterized in that** both rotation bearings (8 and 10) each comprise at least one bevelled ball bearing (7, 9).

## Revendications

1. Machine électrique (1) comportant un carter (2) et un rotor (3) tournant autour d'un axe de rotation vertical (4), deux paliers de rotation, écartés l'un de l'autre dans la direction de l'axe de rotation vertical (4), étant prévus entre le carter (2) et le rotor (3), ledit rotor (3) comportant un enroulement (6) et un volant (5), et ledit volant (5) étant agencé au-dessus de l'enroulement (6) du rotor dans la partie supérieure du rotor (3) tournant autour de l'axe de rotation vertical (4), **caractérisée en ce que** des pieds de support (24) du carter (2) sont déposés en bas contre un collet (26) du carter, lequel reçoit le volant (5).

2. Machine électrique selon la revendication 1, **caractérisée en ce qu'**un plan, défini par les pieds de support (24) du carter (2), coupe l'axe de rotation (4) à peu près dans la zone du centre de gravité du rotor (3).

3. Machine électrique selon les revendications 1 et 2, **caractérisée en ce qu'**il est prévu un aimant de levage dans la partie supérieure du rotor (3).

4. Machine électrique selon l'une quelconque des revendications 1 à 3, **caractérisée en ce que** l'un des paliers de rotation est un palier fixe (8) avec, du côté carter, une bague de roulement (22) fixe et l'autre palier de rotation est un palier libre (10) avec, du côté carter, une bague de roulement (11) mobile dans la direction de l'axe de rotation vertical, et le palier fixe supportant une grande partie du poids du rotor, et des moyens de précontrainte étant prévus pour une force de précontrainte sur la bague de roulement mobile, du côté carter, du palier libre, afin d'exercer sur la bague de roulement (11) mobile, du côté carter, du palier libre (10) une force de précontrainte dirigée vers le haut, laquelle supporte par l'intermédiaire du palier libre (10) une autre grande partie d'au moins 20 % du poids du rotor (3).

5. Machine électrique selon la revendication 4, **caractérisée en ce que** la force de précontrainte dirigée vers le haut supporte, par l'intermédiaire du palier libre (10), 40 à 60 % du poids du rotor (3).

6. Machine électrique selon la revendication 4 ou 5, **caractérisée en ce que** les moyens de précontrainte comportent un ressort mécanique, un ressort magnétique et/ou un ressort pneumatique.

7. Machine électrique selon l'une quelconque des revendications 4 à 6, **caractérisée en ce que** sur le carter (2) est réalisé un manchon mobile (15), dans lequel un coussinet (14), comportant la bague de roulement (11) du côté carter du palier libre (10), est logé de manière mobile dans la direction de l'axe de rotation vertical (4).

8. Machine électrique selon l'une quelconque des revendications 1 à 7, **caractérisée en ce que** les deux paliers de rotation (8 et 10) comportent chacun au moins un palier à roulement à bord oblique (7, 9).
